# EUROPEAN PATENT APPLICATION

(11) **EP 3 967 528 A1**
(43) Date of publication of application: **16.03.2022**
(21) Application number: 20196053.1
(22) Date of filing: 14.09.2020
(51) Int. Cl.: B60D 1/173, B62D 53/08

(54) **A CONNECTOR ASSEMBLY FOR LONG VEHICLES**

(71) Applicant: Van Eck Trailers B.V., 4153 BV Beesd (NL)
(72) Inventor: BERTENS, Ton, 4153 BV Beesd (NL)
(74) Representative: Yamankaradeniz, Kemal

(57) **Abstract**

The invention is intended to be used in long vehicles with front vehicle (1), dolly (2) and trailer vehicle (3) configurations. The invention features connector assembly (B) and it comprises at least one first link rod (4) and at least one second link rod (5) which are connected to the sides of the front vehicle (1) and the dolly (2) based on the layout of the vehicle to achieve a connection between the front vehicle (1) and the dolly (2) respectively.

## Description

### Technical Field

This innovation is related to a connector assembly for long vehicle combinations.

### Known State of the Technique

Today, long vehicle combinations (such as LZVs or LHVs) are commonly used. These vehicles could include different types of vehicles in accordance with the legal regulations of the countries they are used in. For example, these vehicles could be used in trailer, semi-trailer, dolly (respectively) or truck, dolly, semi-trailer (respectively) as well as truck and trailer (respectively) layouts.

Such vehicles are custom designed to provide the turning radius stipulated by the regulations and the axle types and positions are combined accordingly with these regulations. Occasionally, special mechanisms such as semi-floating axles or full-floating axles are used to provide these turning radiuses. To move the trailer, the trailer has to be connected to the vehicle in the front with a connector equipment. Various connector equipment such as drawbars and kingpins are used for this purpose. However, connector systems that are currently used with this technique also bring certain challenges. For example, problems arise when vehicles fitted with independent suspension are used as the vehicle in front. The real purpose of independent suspension is to maximize the cargo area. The chassis of these vehicles does not comprise the whole vehicle and these vehicles are designed with an extremely low ride height in order to maximize the cargo area. This prevents the usage of an assembly to fixate the trailing vehicle. Thus, such vehicles should not be used as the front vehicle in long vehicle configurations.

There's also another technical problem related to the tail lift. Some vehicles have rear doors that comprise of a tail lift. Due to the tail lift, it's not always possible to use a connector assembly in the middle part of the vehicles. Thus, such vehicles should not be used as the front vehicle.

In certain turning radius requirements, the trailing dolly has to move as a fixated extension of the vehicle in the front. In these scenarios, big connector assemblies that extend from the front vehicle to the trailer could be used. This adds extra weight to the vehicle and could cause serious constructional problems on the front vehicles. These vehicles also require additional space when parking.

European patent document (issue number EP0100351 B1) was detected in the known state of the technique. In the aforementioned patent document, configurations such as a cabin that holds the engine and a long trailer fixated to the cabin with a pivot assembly or a non-articulated cabin and a trailer are described. Drawbars are used as connectors in these vehicles.

The patent document with the issue number AU2018264052 A1 approaches long tanker configurations and the drawbar which is developed for the connector assembly.

In conclusion, the aforementioned technical field brings quite a few challenges and the existing techniques are not sufficient to resolve them. This necessitates an improvement or innovation in the technical field.

### Brief Explanation of the Invention

The present invention is related to a connector assembly for long vehicles. The invention fulfills the aforementioned requirements, eliminates all disadvantages and provides additional advantages.

The main purpose of the invention is to achieve a connector structure that enables connections from two sides. Thanks to the connector assembly within the invention, a direct connection could be achieved between the independent suspension vehicle and the trailer from two sides. Thus, vehicles with independent suspension could be used as the vehicle in front, whether the vehicle has a chassis or not. The connection achieved from two sides also provides a space to comfortably fit the tail lift in the middle of the connection assembly.

The invention also aims to provide a light-weight and easy-to-implement connector assembly for long vehicle configurations. To achieve certain turning radiuses, the dolly has to move as a fixated extension of the vehicle in front in long vehicle configurations. Therefore, a wide and fixated connector assembly is used in the known state of the technique. With the connector assembly within the invention, weight reduction and design flexibility are achieved with the usage of two small linking rods, rather than the robust, long and big assemblies that are currently in use.

Detailed descriptions and figures will help to better understand the structure and characteristics of the invention. Therefore, the evaluation should be made by also considering the detailed descriptions and figures.

### Figures To Facilitate Understanding the Invention

Figure 1 shows the side view of the long vehicle configuration that is connected with the connector assembly within the invention.
Figure 2 shows the top view of the long vehicle configuration.
Figure 3 shows the top view of the front vehicle and the dolly connection.

### Reference Information

- B: Connector assembly
- 1: Front vehicle
- 2: Dolly
- 3: Trailer vehicle
- 4: First link rod
- 5: Second link rod
- 6: First anchor point
- 7: Second anchor point

### Detailed Explanation of the Invention

In this detailed explanation, the preferred assemblies of the connector assembly (B), which is the subject of the invention, are only explained in a way not to have any limiting impact for understanding the matter better.

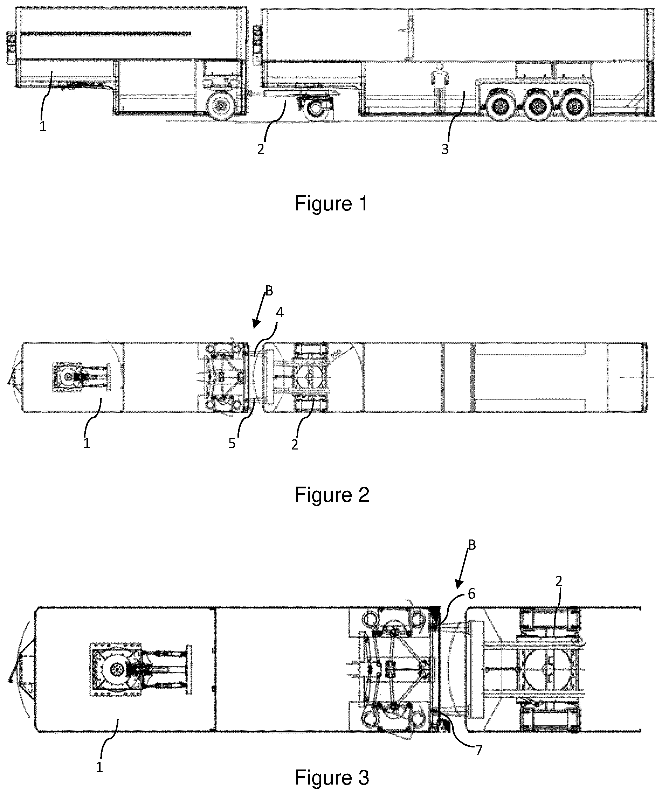

This innovation is related to a connector assembly (B) for long vehicle combinations. Figure 1 shows the side view of the long vehicle configuration that is connected with the connector assembly (B) within the invention.

In such long vehicle configurations, the first vehicle to be connected to the motor vehicle is the front vehicle (1). Dolly (2) acts as the carrier for the trailer vehicle (3) and connects the front vehicle (1) to the trailer vehicle (3). This trailer vehicle (3) is used in transportation and it is usually towed by the dolly (2).

The connector assembly (B) within the invention includes at least one first link rod (4) and at least one second link rod (5) to connect the dolly (2) to the front vehicle (1). The first link rod (4) and second link rod (5), achieves a connection between the front vehicle (1) and the dolly (2), which is in accordance with the order of the configuration. To achieve the connection from the aforementioned sides, the front vehicle (1) has at least one first anchor point (6) and at least one second anchor point (7). First anchor point (6) is the point where the first link rod (4) is connected to the vehicle in front (1). Likewise, the second anchor point (7) is the point where the second link rod (5) is connected to the vehicle in front (1). In this context, the first anchor point (6) and the second anchor point (7) is located on the two opposite sides of the front vehicle (1). The first anchor point (6) and the second anchor point (7) fixates the dolly (2).

With the connector assembly (B) within the invention, anchored front vehicle (1), dolly (2) and trailer vehicle (3) are matched to form the long vehicle configuration. With the connection, the dolly (2) moves as a fixated extension of the front vehicle (1). This enables the vehicle to comply with the turning radiuses required by certain regulations. The solution achieved with the connector assembly (B) also enables connections in vehicles with independent suspension with minimal space loss.

The invention aims to solve the aforementioned technical challenges and achieve all advantages provided in the following detailed description. The invention is intended to be used in long vehicles with front vehicle (1), dolly (2) and trailer vehicle (3) configurations. The invention features a connector assembly (B) and it includes at least one first link rod (4) and at least one second link rod (5) which is connected to the sides of the front vehicle (1) and the dolly (2) (based on the layout of the vehicle) to achieve connection between the front vehicle (1) and the dolly (2) (respectively).

## Claims

1. Connector assembly (B) for long vehicle configurations which comprise front vehicle (1), dolly (2) and trailer vehicle (3) respectively, the connector assembly (B) comprising:
- at least one first link rod (4) and at least one second link rod (5) attached to both sides of the front vehicle (1) and the dolly (2) based on the vehicle layout to achieve connection between the front vehicle (1) and the dolly (2),
- a first anchor point (6) which is the point where the first link rod (4) is connected to the front vehicle (1),
- a second anchor point (7) which is the point where the second link rod (5) is connected to the front vehicle (1),
**characterised in that**:
- the first anchor point (6) and the second anchor point (7) are configured to fixate the dolly (2) to the front vehicle (1),
- the first link rod (4) and second link rod (5) are configured to connect the dolly (2) to the front vehicle (1) for moving the dolly (2) as a fixated extension of the front vehicle (1).

2. A long vehicle comprising a connector assembly (B) according to claim 1.

## Amended claims

### Amended claims in accordance with Rule 137(2) EPC.

1. Connector assembly (B) suitable for using in front vehicle (1), dolly (2) and trailer vehicle (3) configurations respectively,
comprising:
at least one first link rod (4) and at least one second link rod (5) attached to both sides of the front vehicle (1) and the dolly (2) based on the vehicle layout to achieve connection between the front vehicle (1) and the dolly (2).

2. Connector assembly (B) according to claim 1; comprising a first anchor point (6) located on the front vehicle (1) where the first link rod (4) is connected to the front vehicle (1).

3. Connector assembly (B) according to claim 1; comprising a second anchor point (7) on the front vehicle (1) on the location where the second link rod (5) is connected to the front vehicle (1).

4. A long vehicle comprising a connector assembly (B) according to claim 1.
